(19) **Europäisches Patentamt**

**European Patent Office**

**Office européen des brevets**

(11) **EP 0 893 726 B1**

(12) **FASCICULE DE BREVET EUROPEEN**

(45) Date de publication et mention
de la délivrance du brevet:
**12.11.2003 Bulletin 2003/46**

(51) Int Cl.7: **G02B 27/00**, G02B 27/01,
B32B 17/10

(21) Numéro de dépôt: **98401850.7**

(22) Date de dépôt: **21.07.1998**

(54) **Pare-brise en verre feuilleté destiné à être utilisé en même temps comme réflecteur de système HUD**

Verbundglas-Windschutzscheibe zur gleichzeitigen Nutzung als Reflektor in einer head-up Anzeige

Laminated glass windscreen used simultaneously as the reflector in a head-up display

(84) Etats contractants désignés:
**AT BE CH DE ES FR GB IE IT LI LU PT SE**

(30) Priorité: **24.07.1997 DE 19731873**

(43) Date de publication de la demande:
**27.01.1999 Bulletin 1999/04**

(73) Titulaire: **Saint-Gobain Glass France**
**92400 Courbevoie (FR)**

(72) Inventeur: **Sauer, Gerd**
**52224 Stolberg (DE)**

(74) Mandataire: **Muller, René et al**
**SAINT-GOBAIN RECHERCHE,**
**39, quai Lucien Lefranc-BP 135**
**93303 Aubervilliers Cédex (FR)**

(56) Documents cités:
**EP-A- 0 420 228** **EP-A- 0 674 204**
**US-A- 5 130 174**

# Description

La présente invention concerne un pare-brise en verre feuilleté présentant un angle d'amincissement prédéfini destiné à être utilisé en même temps comme réflecteur dans un système HUD, constitué d'au moins deux vitres et d'une couche intercalaire thermoplastique reliant ces vitres l'une à l'autre, la section de la couche allant en diminuant en forme de coin du haut vers le bas.

On sait que la réflexion des rayons lumineux sur les surfaces du verre augmente avec l'angle d'incidence. Dans le cas des pare-brise qui sont montés avec un angle d'inclinaison important, il en résulte que les objets se trouvant à l'intérieur du véhicule et en-dessous du pare-brise sont visibles pour le conducteur dans le pare-brise qui agit comme un miroir. On peut exploiter cet effet par exemple en projetant des informations optiques sur le pare-brise. Les pare-brise ordinaires à faces parallèles posent toutefois à cet égard le problème que les rayons lumineux, qui sont réfléchis à la fois par la surface intérieure et la surface extérieure du pare-brise, présentent à l'observateur deux images décalées l'une par rapport à l'autre.

On sait de par le document EP 0 420 228 B1 que ce problème de double image peut être évité en utilisant une couche intercalaire à section en forme de coin qui amène les deux surfaces réfléchissantes du pare-brise à former un angle tel que les deux images réfléchies se superposent aux yeux du conducteur.

De la sorte, non seulement on obtient une image réfléchie relativement nette, mais en outre, la clarté de l'image est accrue. Cependant, l'angle d'amincissement nécessaire à cet effet, de la couche intercalaire dépend fortement de l'angle de montage du pare-brise et de la position du projecteur d'images dans le véhicule et doit ainsi être soigneusement adapté à chaque situation.

Il est également connu, lors de la fabrication de pare-brise incurvés en verre feuilleté avec bande filtrante le long du côté supérieur, d'utiliser une feuille intercalaire thermoplastique avec bande filtrante teintée. La courbure souhaitée de la bande filtrante est alors obtenue par étirage intentionnellement irrégulier de la feuille. Cet étirage avec déformation plastique de la feuille est effectué pour adapter le profil de la bande filtrante à celui de la partie supérieure du pare-brise feuilleté. L'étirage en arc de cercle entraîne un amincissement du côté long de la courbure, ce qui donne une feuille à section en coin. L'angle d'amincissement d'une feuille ainsi étirée est déterminé par le rayon requis pour la bande filtrante. Dès lors, la feuille thermoplastique à section en coin ainsi formée ne possède normalement pas l'angle d'amincissement qui est nécessaire pour l'utilisation d'un pare-brise comme réflecteur dans un système de présentation tête haute (HUD) comprenant deux surfaces réfléchissantes formant un angle déterminé pour la superposition des images.

L'invention a pour but de fournir un vitrage en verre feuilleté du type cité dans le préambule qui contienne une bande filtrante teintée intégrée à la feuille intercalaire thermoplastique, dont la courbure soit adaptée à celle du bord supérieur de la vitre en verre feuilleté et dont les deux vitres forment également, l'une par rapport à l'autre, un angle tel qu'elles servent de réflecteur dans un système de présentation tête haute comprenant deux images réfléchies superposées en vue d'augmenter la luminosité et d'éviter le dédoublement de l'image.

Suivant l'invention, ce but est atteint en ce que la couche intercalaire est constituée d'au moins deux feuilles thermoplastiques dont l'une est munie d'une bande filtrante teintée disposée le long de son bord supérieur, et l'autre présente une section en coin telle que les deux feuilles forment ensemble l'angle d'amincissement souhaité.

Un vitrage en verre feuilleté suivant l'invention présente l'avantage que les deux surfaces réfléchissantes peuvent être disposées l'une par rapport à l'autre suivant un angle d'amincissement prédéterminé, en vue de l'utilisation du pare-brise comme réflecteur dans un système HUD, et ce, indépendamment de l'angle d'amincissement que présente déjà la feuille thermoplastique à bande filtrante teintée incorporée.

Il est naturellement concevable aussi que le pare-brise en verre feuilleté présente un bord rectiligne au niveau de la bande filtrante. Dans ce cas, la feuille comprenant la bande filtrante ne doit pas être étirée et, par conséquent, ne présente pas non plus de section en coin. L'angle d'amincissement requis n'est alors réalisé que par l'autre feuille.

Suivant un autre aspect de réalisation intéressant de la vitre en verre feuilleté suivant l'invention, on place entre les feuilles thermoplastiques qui forment ensemble l'angle d'amincissement défini, une feuille de support comprenant une couche fonctionnelle. Cette feuille de support peut, par exemple, être en polyéthylène téréphtalate (PET) et être munie d'un revêtement réfléchissant les infrarouges et transparent par ailleurs.

Les angles d'amincissement requis des feuilles thermoplastiques peuvent être obtenus par étirage avec déformation plastique, mais il est également possible d'utiliser des feuilles extrudées d'emblée avec une section en coin. La feuille munie de la bande filtrante teintée peut, elle aussi, être extrudée avec une section en coin.

Lors de l'étirage des feuilles pour leur donner les rayons de courbure nécessaires, qui peuvent descendre jusqu'à 2 m, il faut évidemment veiller à ce que les deux feuilles présentent ensemble une épaisseur minimale pour préserver les fonctions de sécurité et les propriétés d'adhérence. Au besoin, l'homme du métier sélectionnera une épaisseur adéquate des feuilles.

Diverses feuilles polymères du commerce peuvent être utilisées comme feuilles thermoplastiques devant former ensemble l'angle d'amincissement déterminé. En particulier, les feuilles de polyvinylbutyral et de polyuréthanne se prêtent à cet usage.

Un exemple de réalisation d'un pare-brise suivant l'invention est décrit en détail ci-après à l'aide du dessin dans lequel :

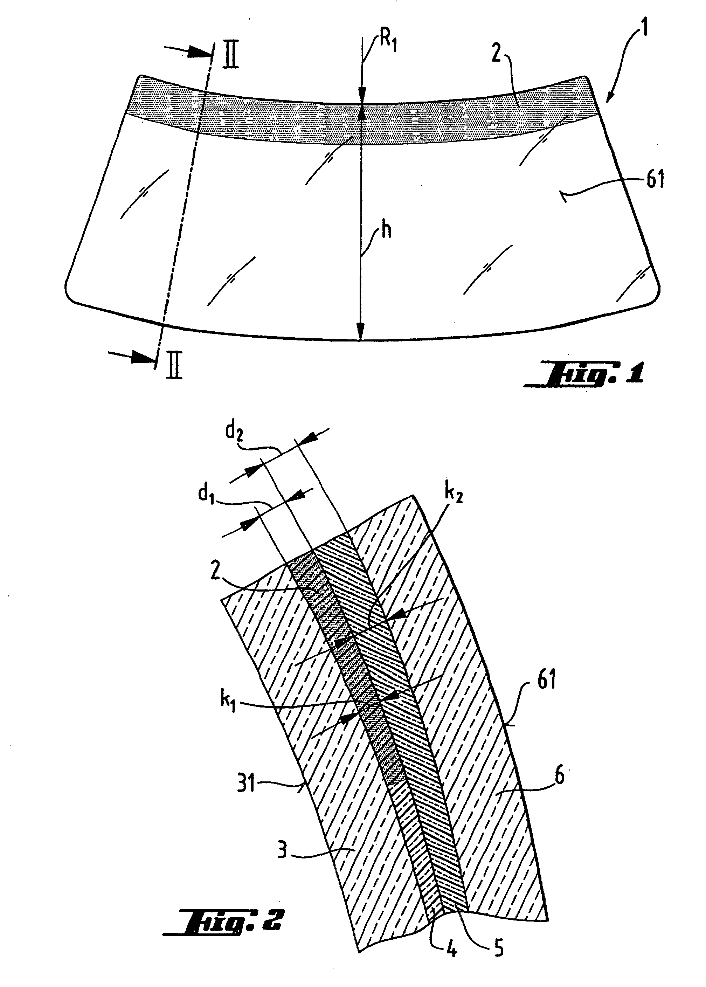

la Fig. 1 est une vue de face d'un pare-brise avec bande filtrante teintée, et
la Fig. 2 est une vue en coupe suivant l'axe II-II de la Fig. 1.

Le pare-brise 1 illustré est muni le long de son bord supérieur d'une bande filtrante teintée 2. Ce pare-brise doit être réalisé avec un angle d'amincissement de 0,5 mrad pour assurer la réflexion superposée d'une image par les surfaces extérieures 31 et 61 des vitres 3 et 6.

Le pare-brise en verre feuilleté 1 présente, au niveau de son bord supérieur, un rayon $R_1$ de 3,30 m, et sa hauteur h est de 0,80 m. La feuille thermoplastique 4 comprenant la bande filtrante teintée 2 est en polyvinylbutyral (PBV). Initialement, elle a une épaisseur globale et après étirage de 0,76 m ($d_1$) sur son bord supérieur. Des rapports géométriques et des données prescrites, on peut déduire l'angle d'amincissement $k_1$ qui est obtenu par l'étirage de la feuille de PVB 4 selon le rayon de courbure désiré $R_1$, à l'aide de la formule

où $d_1$: épaisseur initiale de la feuille

$$k_1 = \frac{d_1}{R_1 + h}$$

où $d_1$: épaisseur initiale de la feuille
$R_1$: rayon de courbure au bord supérieur
h: hauteur de la feuille qui donne $k_1 = 0,185$ mrad.

Pour obtenir l'angle d'amincissement requis de 0,5 mrad, il faut rajouter une deuxième feuille thermoplastique 5, également en PVB, présentant un angle d'amincissement $k_2$ de 0,315 mrad. Pour une épaisseur initiale $d_2 = 1,52$ mm de la deuxième feuille, la relation

$$R_2 = \frac{d_2}{K_2} h$$

donne, pour cette feuille, un rayon d'étirage requis de 4,025 m.

Les deux feuilles thermoplastiques étirées 4 et 5 sont disposées de telle sorte que les angles d'amincissement $k_1$ et $k_2$ s'additionnent pour donner l'angle imposé de 0,5 mrad. Les feuilles sont ensuite assemblées de la manière habituelle avec les vitres incurvées 3 et 6 pour constituer un pare-brise en verre feuilleté qui présente l'angle d'amincissement requis de 0,5 mrad.

## Revendications

1. Pare-brise en verre feuilleté présentant un angle d'amincissement prédéterminé et destiné à être utilisé comme réflecteur dans un système HUD, comprenant au moins deux vitres et une couche intercalaire thermoplastique reliant ces vitres l'une à l'autre, la section de la couche allant en diminuant en forme de coin du haut vers le bas, **caractérisé en ce que** la couche intercalaire est constituée d'au moins deux feuilles thermoplastiques (4, 5) dont l'une (4) est munie le long de son bord supérieur d'une bande filtrante teintée (2), et l'autre (5) présente une section en coin telle que les deux feuilles présentent ensemble l'angle d'amincissement requis.

2. Pare-brise en verre feuilleté suivant la revendication 1, **caractérisé en ce que** la feuille (4) présentant la bande filtrante teintée (2) présente des surfaces parallèles et **en ce que** l'angle d'amincissement est obtenu au moyen d'une autre feuille (5).

3. Pare-brise en verre feuilleté suivant la revendication 1, **caractérisé en ce que** la feuille (4) présentant la bande filtrante teintée (2) présente une section en coin qui résulte de l'étirage de la feuille pour lui donner le rayon de courbure recherché de la bande filtrante (2) avec déformation plastique de la feuille (2).

4. Pare-brise en verre feuilleté suivant la revendication 3, **caractérisé en ce que** l'autre feuille à section en coin est une feuille extrudée d'emblée en forme de coin.

5. Pare-brise en verre feuilleté suivant la revendication 3, **caractérisé en ce que** l'autre feuille à section en coin est une feuille étirée pour lui donner l'angle d'amincissement recherché.

6. Pare-brise en verre feuilleté suivant l'une quelconque des revendications 1 à 5, **caractérisé en ce que** les feuilles (4, 5) qui forment ensemble l'angle d'amincissement recherché, englobent une feuille de support avec couche fonctionnelle.

## Patentansprüche

1. Windschutzscheibe aus Verbundglas mit einem vorgegebenen Keilwinkel für die Verwendung als Reflektor bei einem Head-up-Display-System, aus wenigstens zwei Glasscheiben und einer diese miteinander verbindenden thermoplastischen Zwischenschicht, wobei sich der Querschnitt der Schicht keilförmig von oben nach unten verringert, **dadurch gekennzeichnet, dass** die Zwischenschicht aus wenigstens zwei thermoplastischen Folien (4,5) besteht, von denen die eine Folie (4) entlang ihrer Oberkante mit einem eingefärbten Filterband (2) versehen ist, und die Andere (5) einen solchen Keilquerschnitt aufweist, dass die Folien zusammen den gewünschten Keilwinkel ergeben.

2. Verbund-Windschutzscheibe nach Anspruch 1, **dadurch gekennzeichnet, dass** die das eingefärbte Filterband (2) aufweisende Folie (4) parallele Oberflächen aufweist, und dass sich der Keilwinkel durch eine weitere Folie (5) ergibt.

3. Verbund-Windschutzscheibe nach Anspruch 1, **dadurch gekennzeichnet, dass** die das eingefärbte Filterband (2) aufweisende Folie (4) einen Keilquerschnitt aufweist, der aus dem Recken der Folie auf den gewünschten Krümmungsradius des Filterbandes (2) unter plastischer Verformung der Folie (2) resultiert.

4. Verbund-Windschutzscheibe nach Anspruch 3, **dadurch gekennzeichnet, dass** die weitere Folie mit Keilquerschnitt eine bereits keilförmig extrudierte Folie ist.

5. Verbund-Windschutzscheibe nach Anspruch 3, **dadurch gekennzeichnet, dass** die weitere Folie mit Keilquerschnitt eine auf den gewünschten Keilwinkel gereckte Folie ist.

6. Verbund-Windschutzscheibe nach einem der Ansprüche 1 bis 5, **dadurch gekennzeichnet, dass** die Folien (4,5), die zusammen den gewünschten Keilwinkel bilden, eine zusätzliche Trägerfolie mit einer Funktionsschicht einschließen.

**Claims**

1. Laminated-glass windscreen having a predetermined thinning angle and intended to be used as a reflector in an HUD system, comprising at least two panes and a thermoplastic intermediate layer connecting these panes to each other, the cross-section of the layer decreasing in a wedge shape from top to bottom, **characterised in that** the intermediate layer consists of at least two thermoplastic sheets (4, 5), one (4) of which is provided along its top edge with a tinted filtering strip (2), and the other one (5) of which has a cross-section in a wedge shape such that the two sheets have together the required thinning angle.

2. Laminated-glass windscreen according to Claim 1, **characterised in that** the sheet (4) having the tinted filtering strip (2) has parallel surfaces and **in that** the thinning angle is obtained by means of another sheet (5).

3. Laminated-glass windscreen according to Claim 1, **characterised in that** the sheet (4) having the tinted filtering strip (2) has a wedge-shaped cross-section which results from the drawing of the sheet in order to give it the required radius of curvature of the filtering strip (2) with plastic deformation of the sheet (2).

4. Laminated-glass windscreen according to Claim 3, **characterised in that** the other sheet with a wedge-shaped cross-section is a sheet extruded at the outset in the shape of a wedge.

5. Laminated-glass windscreen according to Claim 3, **characterised in that** the other sheet with a wedge-shaped cross-section is a sheet drawn in order to give it the required thinning angle.

6. Laminated-glass windscreen according to any one of Claims 1 to 5, **characterised in that** the sheets (4, 5) which form together the required thinning angle encompass a support sheet with a functional layer.

Fig. 1

Fig. 2